# EUROPÄISCHE PATENTSCHRIFT

(11) **EP 2 666 178 B1**
(45) Veröffentlichungstag und Bekanntmachung des Hinweises auf die Patenterteilung: **12.11.2014**
(21) Anmeldenummer: 12700660.9
(22) Anmeldetag: 16.01.2012
(51) Int. Cl.: H01H 33/56, H02B 13/045, H02B 13/055, F17C 13/04

(54) **VORRICHTUNG ZUM ABSAUGEN VON SCHUTZGAS AUS EINEM BEHÄLTER**
DEVICE FOR EXTRACTING BY SUCTION PROTECTIVE GAS FROM A CONTAINER
APPAREIL POUR ASPIRER UN GAZ DE PROTECTION PRÉSENT DANS UN RÉSERVOIR

(30) Priorität: 20.01.2011 DE 102011002935
(43) Veröffentlichungstag der Anmeldung: 27.11.2013
(73) Patentinhaber: Siemens Aktiengesellschaft, 80333 München (DE)
(72) Erfinder: BRAND, Bastiaan, 1223 HM Hilversum (NL)
(86) Internationale Anmeldenummer: PCT/EP2012/050554
(87) Internationale Veröffentlichungsnummer: WO 2012/098073

(56) Entgegenhaltungen:
- DE-A1- 4 026 101
- FR-A1- 2 616 688
- FR-A1- 2 672 662

## Beschreibung

Die Erfindung betrifft eine Vorrichtung zum Absaugen eines Schutzgases aus einem gasdichten Behälter mit einem an seiner Anlegeseite formkomplementär zu einer Behälterwand des Behälters ausgebildeten und Dichtmittel aufweisenden Anlegeflansch, Penetrationsmitteln, die in einer Draufsicht von dem Anlegeflansch umfänglich geschlossen umgeben und zum Erzeugen einer Gasaustrittsöffnung in der Behälterwand eingerichtet sind, einem zu den Penetrationsmitteln hin offen liegenden Absaugstutzen, der mit seinem von den Penetrationsmitteln abgewandten Ende mit einer Absaugpumpe verbindbar ist, und Befestigungsmitteln zum gasdichten Halten des Anlegeflansches an der Behälterwand.

Eine solche Vorrichtung ist aus der Praxis bereits bekannt. Im Bereich der Energieübertragung und -verteilung sind Mittel- und Hochspannungsanlagen üblich, deren Schaltkontakte, Leiter oder dergleichen in einem gasdicht gekapselten Gehäuse angeordnet sind, das mit einem Schutzgas befüllt ist. Solche gasisolierten Hochspannungsanlagen können dann wesentlich kompakter als vergleichbare luftisolierte Anlagen gebaut werden, da das Schutzgas, beispielsweise Schwefelhexafluorid, eine wesentlich höhere Durchschlagfestigkeit als Luft aufweist. Zur Schutzgasisolation werden die zu isolierenden auf einem Hochspannungspotenzial liegenden Bauteile in einem metallischen Gehäuse angeordnet, das dann mit einem zweckmäßigen Schutzgas befüllt und anschließend gasdicht verschweißt wird. Ein Austausch des Schutzgases ist im Rahmen der prognostizierten Lebensdauer von etwa 30 Jahren nicht vorgesehen. Im Wartungsfall oder aber auch zum Ab- oder Nachrüsten gasisolierter Anlagen muss das Schutzgas jedoch wieder aus dem Gehäuse entfernt werden. Da Schutzgase in der Regel als die Umwelt belastende Gase eingestuft werden, können diese jedoch nicht einfach in die Atmosphäre abgelassen werden. Vielmehr kommt in der Praxis ein Absaugkopf zum Einsatz, der gasdicht mit der Behälterwandung verbunden werden kann. Hierzu werden Gewindebolzen auf die Behälterwandung aufgeschweißt. Nach dem Aufschweißen der Gewindebolzen wird der Absaugkopf auf den Behälter geschraubt, wobei Dichtmittel vorgesehen sind, die umfänglich geschlossen gegen die Behälterwand gedrückt werden. Im Absaugkopf sind ferner Penetrationsmittel vorgesehen, mit dessen Hilfe eine Gasaustrittsöffnung in der Behälterwand erzeugt werden kann. Die Penetrationsmittel und somit die von diesen in der Behälterwand erzeugte Gasaustrittsöffnung sind von Dichtmitteln und dem Absaugkopf gasdicht gekapselt. Zum Abführen des Gases aus dem Absaugkopf dient ein Absaugstutzen, dessen Mündung den Penetrationsmitteln zugewandt ist und mit einer Absaugpumpe verbunden werden kann. Das Schutzgas kann so kontrolliert über den Absaugstutzen aus dem Behälterinneren entfernt werden, wobei die Dichtmittel einen unkontrollierten Gasaustritt in die Außenatmosphäre verhindern.

Das Dokument FR 2 672 662 A1 offenbart eine Vorrichtung gemäß dem Oberbegriff des Anspruchs 1.

Das Anbringen des Absaugkopfes mit Hilfe eines Bolzenschweißverfahrens ist jedoch aufwändig.

Aufgabe der Erfindung ist es daher, eine Vorrichtung der eingangs genannten Art bereitzustellen, mit der das Schutzgas einfach, schnell, sicher und kostengünstig aus dem Behälterinneren abgesaugt werden kann.

Die Erfindung löst diese Aufgabe dadurch, dass die Befestigungsmittel zum Erzeugen eines Unterdruckes in einer von der Behälterwand und dem Anlegeflansch begrenzten Vakuumkammer eingerichtet sind.

Erfindungsgemäß ist eine Vorrichtung vorgesehen, die einen Anlegeflansch ausbildet, welcher formkomplementär zur Behälterwand ausgebildet ist. Mit anderen Worten kann die Vorrichtung mit ihrem Anlegeflansch flächig an den Behälter angelehnt werden. Der Anlegeflansch ist umfänglich geschlossen ausgebildet und umgibt in einer Draufsicht auf die erfindungsgemäße Vorrichtung Penetrationsmittel, die beispielsweise in Gestalt eines sich rechtwinklig zur Behälterwand erstreckenden Penetrationsbolzens ausgestaltet sind. Dabei ist der Penetrationsbolzen in seiner Längsrichtung verschiebbar und gasdicht in einem Absaugkopf der erfindungsgemäßen Vorrichtung gelagert, so dass er durch einen Schlag mit einem stumpfen Gegenstand oder durch Einleiten einer Schraubbewegung durch die Behälterwand getrieben werden kann. Im letzteren Fall ist der Penetrationsbolzen mit einem Außengewinde ausgerüstet. Wird das Penetrationsmittel anschließend aus der so erzeugten Gasaustrittsöffnung entfernt, kann das Schutzgas aus dem Inneren des Behälters austreten, wobei die Vorrichtung mit Teilen ihrer Dichtmittel die Gasaustrittsöffnung umfänglich geschlossen kapselt, so dass das Schutzgas nicht unkontrolliert in die Atmosphäre austreten kann. Mit anderen Worten entfaltet der Anlegeflansch eine Dichtwirkung an der Behälterwand. Hierzu dienen zweckmäßige Dichtungsmittel.

Die erfindungsgemäße Vorrichtung verfügt ferner über einen Absaugstutzen, der in einen von der erfindungsgemäßen Vorrichtung oberhalb der Gasaustrittsöffnung gekapselten Bereich mündet. Mit anderen Worten verfügt die Vorrichtung über einen Absaugstutzen, der so angeordnet ist, dass er den Penetrationsmitteln zugewandt ist. Nachdem die Penetrationsmittel eine Gasaustrittsöffnung in der Behälterwand erzeugt haben, kann das aus der Gasaustrittsöffnung austretende Gas mittels des Absaugstutzens bequem abgesaugt werden. Dabei ist der Absaugstutzen, der auch als Ansatzrohrstück bezeichnet werden kann, an seiner von der Gasaustrittsöffnung abgewandten Seite über eine zweckmäßige Verbindung, beispielsweise eine Rohr- oder Schlauchverbindung, mit einer Absaugpumpe verbindbar, die einen Unterdruck erzeugt und somit für ein Absaugen des Schutzgases aus dem Inneren des Behälters sorgt.

Erfindungsgemäß erzeugen die Befestigungsmittel einen Unterdruck in einer Vakuumkammer. Die Vakuumkammer ist zum Einen von dem Anlegeflansch und zum Anderen von der Behälterwand begrenzt, so dass aufgrund des Druckunterschiedes zwischen der Außenatmosphäre und dem Innendruck der Vakuumkammer eine Haftkraft bereitgestellt ist, die groß genug ist, um den Anlegeflansch fest gegen den Behälter zu pressen. In einer an die Behälterwand angelegten Stellung der Vorrichtung sorgen die Dichtmittel für eine gasdichte Abschottung der Vakuumkammer sowohl gegenüber der Gasaustrittsöffnung und dem Ansaugstutzen, als auch gegenüber der Außenatmosphäre.

Zweckmäßigerweise bildet der Anlegeflansch einen von Dichtmitteln begrenzten Unterdruckabschnitt aus, der nach dem Anlegen an die Behälterwand mit dieser die Vakuumkammer begrenzt. Mit anderen Worten wird der Teil des Anlegeflansches, der die Vakuumkammer begrenzt, als Unterdruckabschnitt bezeichnet. Darüber hinaus sind die Dichtmittel zur Begrenzung der Vakuumkammer vorgesehen.

Zweckmäßigerweise weisen die Befestigungsmittel einen zu einem Unterdruckabschnitt hin offen liegenden Vakuumstutzen auf, der mit einer Vakuumpumpe verbunden werden kann. Die Vakuumpumpe ist dazu eingerichtet, den Unterdruck in der Vakuumkammer zu erzeugen. Hierzu mündet der mit der Vakuumpumpe verbindbare Vakuumstutzen in den Unterdruckabschnitt und somit in die spätere Vakuumkammer zwischen Behälter und Anlegeflansch.

Vorteilhafterweise ist der Anlegeflansch formfest ausgebildet. Beispielsweise besteht der Anlegeflansch aus einem geeigneten Metall, wie beispielsweise Aluminium, Edelstahl oder dergleichen oder aus einem sonstigen formfesten Material, wie beispielsweise einem zweckmäßigen Kunststoff.

Zweckmäßigerweise ist der Anlegeflansch an seiner Anlegeseite eben ausgebildet. Mit seiner flachen Anlegeseite wird der Anlegeflansch an eine ebenfalls ebene Wand angelegt. An seiner vom Anlegeflansch abgewandten Seite ist der Anlegeflansch beispielsweise mit einem domartigen Aufsatz ausgerüstet, in dem die Penetrationsmittel gasdicht und axial verschiebbar gehalten sind. Der domartige Aufsatz dient darüber hinaus auch zur Kapselung des austretenden Schutzgases. Ein solcher Anlegeflansch kann auch als Absaugkopf bezeichnet werden.

Der Anlegeflansch weist zweckmäßigerweise eine kreisförmige oder ellipsenförmige Außenkontur auf, wobei die Penetrationsmittel zentrisch gehalten sind, so dass ein beispielsweise stiftförmiger Penetrationsbolzen im Zentrum des beispielsweise ringförmigen Anlegeflansches die Behälterwand durchstößt.

Zweckmäßigerweise sind die Dichtmittel ringförmige elastische Dichtringe, die in zweckmäßigen Nuten des Anlegeflansches angeordnet sind.

Besonders vorteilhaft ist es, wenn Dichtmittel ein umfänglich geschlossenes äußeres Dichtelement sowie ein umfänglich geschlossenes inneres Dichtelement aufweisen, wobei das innere Dichtelement innerhalb des äußeren Dichtelementes angeordnet ist, sich der Unterdruckabschnitt zwischen dem inneren und dem äußeren Dichtelement erstreckt und die Penetrationsmittel in einer Draufsicht innerhalb des inneren Dichtelementes angeordnet sind. Mit anderen Worten sorgen die Penetrationsmittel beispielsweise in Gestalt eines axial verschiebbaren Penetrationsbolzens dafür, dass sich die Gasaustrittsöffnung an einer Stelle ausbildet, die nach dem Anbringen des Absaugkopfes vollständig von dem inneren Dichtelement umschlossen ist. Dies sorgt dafür, dass das Schutzgas nicht in die Vakuumkammer gelangt, sondern von dem erfindungsgemäßen Absaugkopf gekapselt und kontrolliert abgesaugt werden kann. Die nach dem Anlegen an die Behälterwand entstehende Vakuumkammer verläuft ringförmig um die Penetrationsmittel. Dem inneren Dichtelement kommt somit eine Doppelfunktion zu. Es dient zum Einen zur Kapselung der Schutzgasaustrittsöffnung und zum Anderen zur Begrenzung der Vakuumkammer.

Zweckmäßigerweise ist ein Haltegriff zum Aufsetzen des Anlegeflansches auf den Behälter von Hand vorgesehen.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Vorrichtung in einer perspektivischen Ansicht,
- Figur 2: die Vorrichtung gemäß Figur 1 von unten und die
- Figuren 3 bis 6: die Vorrichtung gemäß Figur 1 in verschiedenen Stellungen bei einem Absaugvorgang jeweils in einer Querschnittsansicht zeigen.

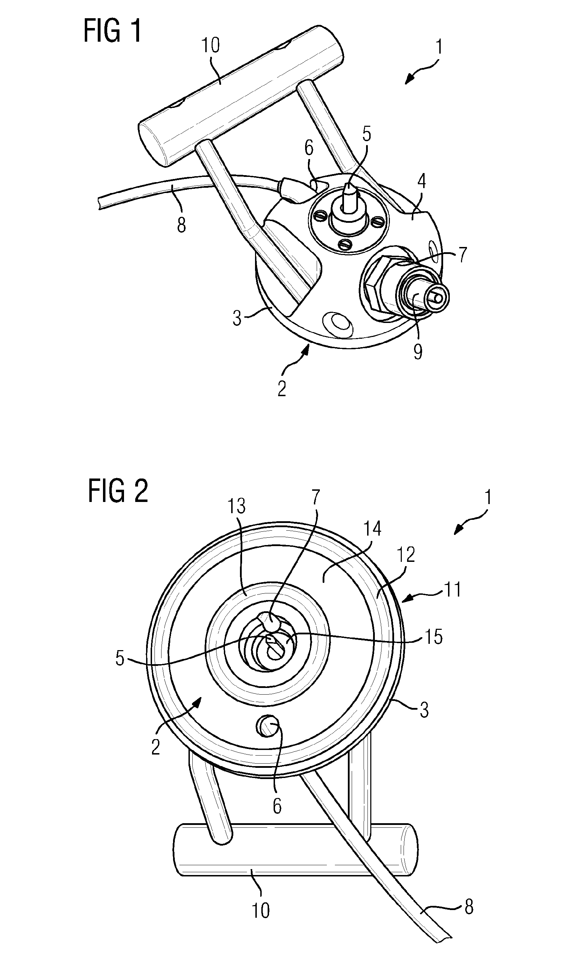

Figur 1 zeigt ein Ausführungsbeispiel der erfindungsgemäßen Vorrichtung 1 in einer perspektivischen Ansicht. Die gezeigte Vorrichtung 1 ist an einer unteren Anlegeseite 2 eben ausgebildet und weist in einer Draufsicht einen kreisförmigen Anlegeflansch 3 sowie einen domförmigen Aufsatz 4 auf. Ferner ist ein bolzenförmiges Penetrationsmittel 5 erkennbar, das sich im Wesentlichen rechtwinklig zu dem ebenen Anlegeflansch 3 erstreckt, in seiner Längsrichtung verschiebbar und gleichzeitig gasdicht gelagert ist. Der Aufsatz 4 ist ferner mit einem Vakuumstutzen 6 sowie mit einem Absaugstutzen 7 verbunden. Der Figur 1 nur teilweise erkennbare Vakuumstutzen 6 ist über eine Schlauchverbindung 8 an eine figürlich nicht dargestellte Vakuumpumpe angeschlossen. In dem Absaugstutzen 7 ist ein Rückschlagventil 9 angeordnet, das einen ungewollten Schutzgasaustritt verhindert. Zum Aufsetzen der Vorrichtung 1, die auch als Absaugkopf bezeichnet werden kann, auf eine Behälterwand ist ein Haltegriff 10 vorgesehen.

Figur 2 zeigt die Vorrichtung 1 gemäß Figur 1 in einer perspektivischen Darstellung von unten, in der die Anlegeseite 2 verdeutlicht ist. Es ist erkennbar, dass der Anlegeflansch 3 an seiner Anlegeseite 2 flach oder mit anderen Worten eben ausgebildet ist und aus einem formfesten Metall, hier Edelstahl, besteht.

In dem Anlegeflansch 3 sind kreisförmige und konzentrisch zueinander angeordnete Dichtnuten ausgebildet, in denen ebenfalls ringförmig ausgebildete Dichtmittel 11 in Gestalt eines äußeren Dichtelementes 12 sowie eines inneren Dichtelementes 13 angeordnet sind. Die Dichtelemente 12, 13 sind ebenfalls konzentrisch zueinander angeordnet. Zwischen dem inneren Dichtelement 13 und dem äußeren Dichtelement 12 erstreckt sich ein Unterdruckabschnitt 14 des Anlegeflansches 3, der zusammen mit dem inneren Dichtelement 13 dem äußeren Dichtelement 12 und der in der Figur 2 nicht gezeigten Behälterwand eine Vakuumkammer begrenzt, in welche der Vakuumstutzen 6 mündet. Ferner sind die Mündung des Absaugstutzens 7 und das freie Ende des Penetrationsbolzens 5 erkennbar, welcher über eine zweckmäßige Penetrationsdichtung 15 gasdicht und gleichzeitig rechtwinklig zur Anlegeseite 2 verschiebbar in dem Aufsatz 4 gehalten ist.

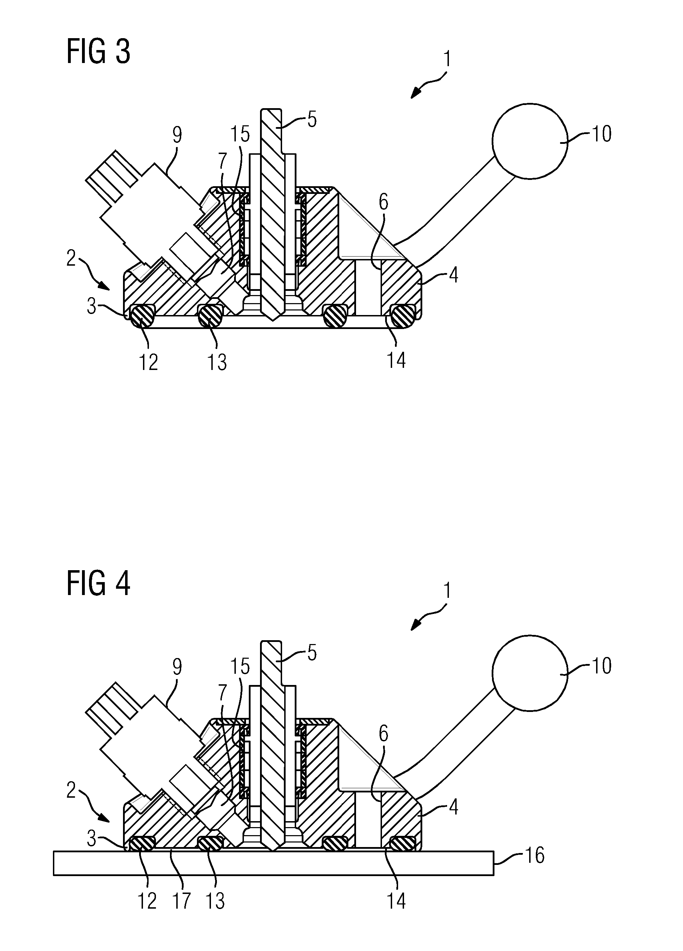

Figur 3 zeigt die Vorrichtung 1 gemäß der Figur 1 in einer quer geschnittenen Seitenansicht. Insbesondere ist in dieser Ansicht erkennbar, dass der Absaugstutzen 7 mit seinem freien offenen Ende dem freien Ende des Penetrationsbolzens 5 zugewandt ist und mit diesem oberhalb des inneren Dichtelementes 13 angeordnet ist. Das innere Dichtelement 13 sorgt somit neben der Abdichtung der späteren Vakuumkammer auch für eine gasdichte Kapselung des Penetrationsbolzens 5 und des Absaugstutzens 7 in dem Aufsatz 4. Der Vakuumstutzen 6 mündet hingegen in dem Übergangsabschnitt 14, der sich zwischen dem inneren Dichtelement 13 und dem äußeren Dichtelement 12 erstreckt. Somit ist eine Verbindung zwischen dem Vakuumstutzen 6 und dem Absaugstutzen 7 durch das innere Dichtelement 13 verhindert.

Figur 4 zeigt die Vorrichtung 1 gemäß Figur 3, wobei die Vorrichtung 1 an eine Behälterwand 16 angelegt ist, die noch keine Gasaustrittsöffnung aufweist. Über den Vakuumstutzen 6 wurde jedoch in einer von der Behälterwand 16 dem inneren Dichtelement 13, dem äußeren Dichtelement 12 und dem Unterdruckabschnitt 14 begrenzten Vakuumkammer 17 mittels einer in den Figuren nicht gezeigte Vakuumpumpe ein Unterdruck erzeugt. Die Druckdifferenz zwischen dem Luftdruck der Außenatmosphäre und dem Innendruck der Vakuumkammer 17 entfaltet eine Saugwirkung, mit welcher der Absaugkopf 2 gegen die Behälterwand 16 gepresst wird, so dass die Dichtelemente 13 und 12 dichtend zusammengedrückt werden.

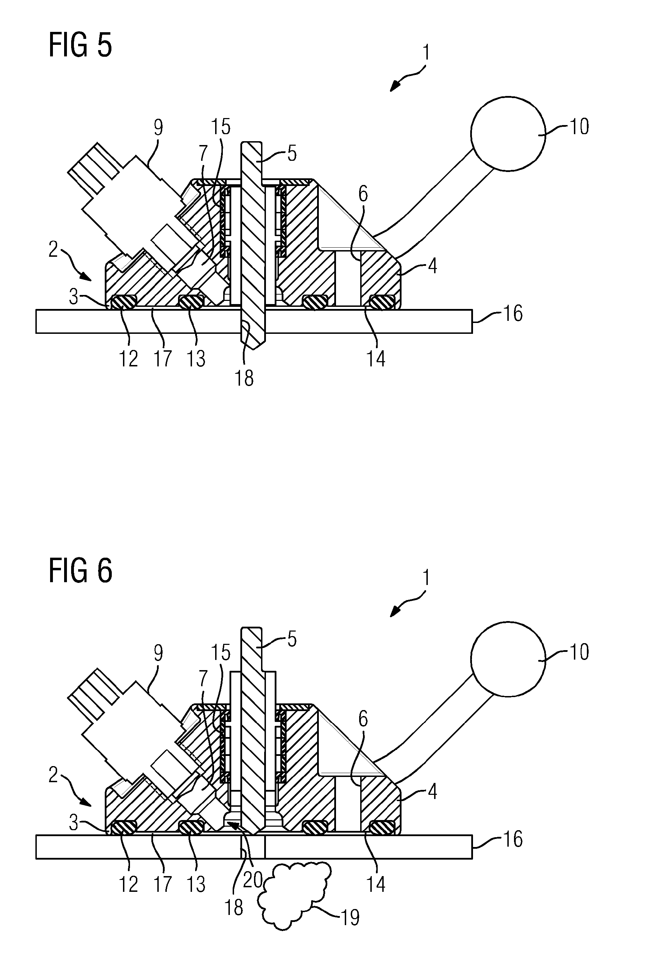

Figur 5 zeigt die Vorrichtung 1 gemäß Figur 4, die gegen die Behälterwand 16 gepresst ist. Darüber hinaus ist der Penetrationsbolzen 5 durch die Behälterwand 16 getrieben. Hierbei entsteht eine Gasaustrittsöffnung 18, die jedoch durch den Penetrationsbolzen 5 verstopft wird. Zum Absaugen des Gases wird der Penetrationsbolzen 5 daher aus der Gasaustrittsöffnung 18 herausgezogen. Diese Stellung ist in Figur 6 verdeutlicht, wobei das austretende Schutzgas in Form einer diffusiven Wolke 19 symbolisiert ist. Das Schutzgas 19 kann daher aus der Gasaustrittsöffnung 18 austreten und gelangt in einen von dem inneren Dichtelement 13 und dem Aufsatz 4 gekapselten Gasaustrittsraum 20, in den der Absaugstutzen 7 mündet.

In dem in Figur 6 gezeigten Ausführungsbeispiel ist der Absaugstutzen 7 mit einem Rückschlagventil 9 verbunden, das den Austritt des Schutzgases 19 aus dem Gausaustrittsraum 20 in die Atmosphäre verhindert. Zum Absaugen des Schutzgases 19 ist daher ein Aufsatz erforderlich, der beispielsweise mit einer nicht gezeigten Absaugpumpe verbunden ist und somit ein bequemes Absaugen des Schutzgases ermöglicht. Nachdem das Schutzgas 19 aus dem Behälterinneren entfernt wurde, wird die Vakuumkammer 17 belüftet, so dass anschließend der Absaugkopf bequem von der Behälterwand 16 entfernt werden kann.

## Patentansprüche

1. Vorrichtung (1) zum Absaugen eines Schutzgases (19) aus einem gasdichten Behälter mit
- einem an seiner Anlegeseite (2) formkomplementär zu einer Behälterwand (16) des Behälters ausgebildeten und Dichtmittel (11) aufweisenden Anlegeflansch (3),
- Penetrationsmitteln (5), die in einer Draufsicht von den Dichtmitteln (11) umfänglich geschlossen umgeben und zum Erzeugen einer Gasaustrittsöffnung (18) in der Behälterwand (16) eingerichtet sind,
- einem zu den Penetrationsmitteln (5) hin offen liegenden Absaugstutzen (7), der mit seinem von den Penetrationsmitteln abgewandten Ende mit einer Absaugpumpe verbindbar ist, und
- Befestigungsmitteln (6,12,13,14) zum gasdichten Halten des Anlegeflansches (3) an der Behälterwand (16),
**dadurch gekennzeichnet, dass** die Befestigungsmittel (6,12,13,14) zum Erzeugen eines Unterdruckes in einer von der Behälterwand (16) und dem Anlegeflansch (3) begrenzten Vakuumkammer (17) eingerichtet sind.

2. Vorrichtung (1) nach Anspruch 1,
**dadurch gekennzeichnet, dass**
der Anlegeflansch (3) einen von Dichtmitteln (12,13) begrenzten Unterdruckabschnitt (14) ausbildet, der nach dem Anlegen an die Behälterwand (16) mit dieser die Vakuumkammer (17) begrenzt.

3. Vorrichtung (1) nach Anspruch 2,
**dadurch gekennzeichnet, dass**
die Befestigungsmittel (6,12,13,14) einen zum einem Unterdruckabschnitt (14) hin offen liegenden Vakuumstutzen (6) aufweisen, der mit einer Vakuumpumpe verbindbar ist.

4. Vorrichtung (1) nach einem der vorhergehenden Ansprüche,
**dadurch gekennzeichnet, dass**
der Anlegeflansch (3) formfest ist.

5. Vorrichtung (1) nach einem der vorhergehenden Ansprüche,
**dadurch gekennzeichnet, dass**
der Anlegeflansch (3) an einer Anlegeseite eben ausgebildet ist.

6. Vorrichtung (1) nach einem der vorhergehenden Ansprüche,
**dadurch gekennzeichnet, dass**
die Dichtmittel ringförmige elastische Dichtringe (12,13) sind.

7. Vorrichtung (1) nach einem der Ansprüche 2 bis 6,
**dadurch gekennzeichnet, dass**
die Dichtmittel (12,13) in Nuten des Anlegeflansches (3) angeordnet sind.

8. Vorrichtung (1) nach einem der vorhergehenden Ansprüche,
**dadurch gekennzeichnet, dass**
die Dichtmittel (12,13) ein umfänglich geschlossenes äußeres Dichtelement (12) sowie ein umfänglich geschlossenes inneres Dichtelement (13) aufweisen, wobei das innere Dichtelement (13) innerhalb des äußeren Dichtelementes (12) angeordnet ist und sich der Unterdruckabschnitt (14) zwischen dem inneren (13) und dem äußeren (12) Dichtelement erstreckt und wobei die Penetrationsmittel (5) oberhalb des inneren Dichtelementes (13) angeordnet sind.

9. Vorrichtung (1) nach einem der vorhergehenden Ansprüche,
**dadurch gekennzeichnet, dass**
ein Haltegriff (10) zum Aufsetzen des Anlegeflansches (3) auf den Behälter von Hand vorgesehen ist.

## Claims

1. Apparatus (1) for removing a protective gas (19) by suction from a gas-tight container, having
- an attachment flange (3) which is formed on its attachment side (2) so as to complement the shape of a container wall (16) of the container and which has sealing means (11),
- penetration means (5) which in a plan view are surrounded by the sealing means (11) in a circumferentially closed manner and are designed to create a gas outlet opening (18) in the container wall (16),
- a suction-removal nozzle (7) which is open to the penetration means (5) and can be connected to a suction-removal pump by way of its end which faces away from the penetration means, and
- fastening means (6, 12, 13, 14) for fastening the attachment flange (3) to the container wall (16) in a gas-tight manner,
**characterised in that**
the fastening means (6, 12, 13, 14) are set up to create a vacuum in a vacuum chamber (17) which is delimited by the container wall (16) and the attachment flange (3).

2. Apparatus (1) according to claim 1,
**characterised in that**
the attachment flange (3) forms a vacuum section (14), delimited by the sealing means (12, 13), which after attachment to the container wall (16) therewith delimits the vacuum chamber (17).

3. Apparatus (1) according to claim 2,
**characterised in that**
the fastening means (6, 12, 13, 14) have a vacuum nozzle (6) which can be connected to a vacuum pump and which is open to a vacuum section (14).

4. Apparatus (1) according to one of the preceding claims,
**characterised in that**
the attachment flange (3) is dimensionally stable.

5. Apparatus (1) according to one of the preceding claims,
**characterised in that**
the attachment flange (3) is designed to be smooth on one attachment side.

6. Apparatus (1) according to one of the preceding claims,
**characterised in that**
the sealing means are annular flexible sealing rings (12, 13).

7. Apparatus (1) according to one of claims 2 to 6,
**characterised in that**
the sealing means (12, 13) are arranged in grooves of the attachment flange (3).

8. Apparatus (1) according to one of the preceding claims,
**characterised in that**
the sealing means (12, 13) have a circumferentially closed outer sealing element (12) and a circumferentially closed inner sealing element (13), wherein the inner sealing element (13) is arranged inside the outer sealing element (12) and the vacuum section (14) extends between the inner (13) and the outer (12) sealing element, and wherein the penetration means (5) are arranged above the inner sealing element (13).

9. Apparatus (1) according to one of the preceding claims,
**characterised in that**
a handle (10) is provided for fitting the attachment flange (3) to the container by hand.

## Revendications

1. Dispositif ( 1 ) pour aspirer un gaz ( 19 ) de protection d'un récipient étanche au gaz, comprenant
- un flasque ( 3 ) d'application constitué de forme complémentaire, sur son côté ( 2 ) d'application, d'une paroi ( 16 ) du récipient et ayant des moyens ( 11 ) d'étanchéité,
- des moyens ( 5 ) de pénétration, qui, dans une vue en plan, sont entourés d'une manière fermée périphériquement par les moyens ( 11 ) d'étanchéité et sont agencés pour ménager une ouverture ( 18 ) de sortie du gaz dans la paroi ( 16 ) du récipient,
- une tubulure ( 7 ) d'aspiration ouverte vers les moyens ( 5 ) de pénétration et pouvant, par son extrémité éloignée les moyens de pénétration, communiquer avec une pompe d'aspiration et
- des moyens ( 6, 12, 13, 14 ) de fixation, pour maintenir, d'une manière étanche au gaz, le flasque ( 3 ) d'application sur la paroi ( 16 ) du récipient,
**caractérisé en ce que**
les moyens ( 6, 12, 13, 14 ) de fixation sont agencés pour produire une dépression dans une chambre ( 17 ) sous vide, délimitée par la paroi ( 16 ) du récipient et par le flasque ( 3 ) d'application.

2. Dispositif ( 1 ) suivant la revendication 1,
**caractérisé en ce que**
le flasque ( 3 ) d'application forme une section ( 14 ) en dépression, qui est délimitée par les moyens ( 12, 13 ) d'étanchéité et qui, après l'application sur la paroi ( 16 ) du récipient, délimite avec celle-ci la chambre ( 17 ) sous vide.

3. Dispositif ( 1 ) suivant la revendication 2,
**caractérisé en ce que**
les moyens ( 6, 12, 13, 14 ) de fixation ont une tubulure ( 6 ) sous vide, ouverte vers une section ( 14 ) en dépression et pouvant communiquer avec une pompe à vide.

4. Dispositif ( 1 ) suivant l'une des revendications précédentes,
**caractérisé en ce que** le flasque ( 3 ) d'application est de forme fixe.

5. Dispositif ( 1 ) suivant l'une des revendications précédentes,
**caractérisé en ce que**
le flasque ( 3 ) d'application est constitué plan sur un côté d'application.

6. Dispositif ( 1 ) suivant l'une des revendications précédentes,
**caractérisé en ce que**
les moyens d'étanchéité sont des joints ( 12, 13 ) élastiques annulaires.

7. Dispositif ( 1 ) suivant l'une des revendications 2 à 6,
**caractérisé en ce que**
les moyens ( 12, 13 ) d'étanchéité sont mis dans des rainures du flasque ( 3 ) d'application.

8. Dispositif ( 1 ) suivant l'une des revendications précédentes,
**caractérisé en ce que**
les moyens ( 12, 13 ) d'étanchéité ont un élément ( 12 ) d'étanchéité extérieur fermé périphériquement ainsi qu'un élément ( 13 ) d'étanchéité intérieur fermé périphériquement, l'élément ( 13 ) d'étanchéité intérieur étant disposé à l'intérieur de l'élément ( 12 ) d'étanchéité extérieur et la section ( 14 ) en dépression s'étend entre l'élément d'étanchéité intérieur ( 13 ) et l'élément d'étanchéité extérieur ( 12 ) et les moyens ( 5 ) de pénétration sont disposés au-dessus de l'élément ( 13 ) d'étanchéité intérieur.

9. Dispositif ( 1 ) suivant l'une des revendications précédentes,
**caractérisé en ce qu'**il est prévu une poignée ( 10 ) de maintien pour mettre à la main le flasque ( 3 ) d'application sur le récipient.
